# EUROPÄISCHE PATENTSCHRIFT

(11) **EP 3 300 223 B1**
(45) Veröffentlichungstag und Bekanntmachung des Hinweises auf die Patenterteilung: **05.08.2020**
(21) Anmeldenummer: 17192961.5
(22) Anmeldetag: 25.09.2017
(51) Int. Cl.: H02K 5/22, H01R 13/622

(54) **LÖSBARE VERBINDUNGSEINRICHTUNG FÜR HOHE STRÖME**
RELEASABLE CONNECTOR ASSEMBLY FOR HIGH CURRENTS
DISPOSITIF DE LIAISON AMOVIBLE POUR DÉBITS ÉLEVÉS

(30) Priorität: 26.09.2016 DE 102016118163
(43) Veröffentlichungstag der Anmeldung: 28.03.2018
(73) Patentinhaber: RAPA Automotive GmbH & Co. KG, 95100 Selb (DE)
(72) Erfinder: KEMNITZ, Rocco, 08606 Bobenneukirchen (DE); LAUTERBACH, Frank, 95186 Höchstädt (DE); BAUER, Jörg, 95100 Selb (DE); LEHNIGER, Falk, 08606 Oelsnitz (DE)
(74) Vertreter: Klunker IP Patentanwälte PartG mbB

(56) Entgegenhaltungen:
- WO-A1-2016/035476
- DE-A1-102014 201 190
- DE-U1- 20 022 774
- US-A1- 2007 207 652

## Beschreibung

Die Erfindung betrifft allgemein Schnittstellen zur Versorgung einer elektrifizierten Vorrichtung (E-Vorrichtung) mit der benötigten elektrischen Leistung. Die Erfindung betrifft genauer eine lösbare Schnittstelle, eine Anschlusseinrichtung an der E-Vorrichtung und einer Leitungsanschlusseinrichtung für eine Anschlussleitung zur Verbindung mit der Anschlusseinrichtung, die zusammen eine Verbindungseinrichtung für hohe Ströme bilden, sowie eine E-Vorrichtung mit einer solchen Anschlusseinrichtung.

In Folge fortschreitender Elektrifizierung, insbesondere im Automotiv-Bereich, werden zunehmend E-Vorrichtungen verbaut. Dies sind zunächst elektrische Antriebe als Nebenantrieb bei Hybridfahrzeugen oder Hauptantrieb bei voll elektrifizierten Fahrzeugen aber auch Nebenaggregate, wie z. B. der Lenkung, des Fahrwerks etc. Nebenaggregate im Automotiv-Bereich als E-Vorrichtungen können E-Maschinen sein. Ein Beispiel ist eine elektrohydraulische Motor-Pumpen-Einheit (MPE), auch Power-Pack genannt. MPEs bestehen im Wesentlichen aus drei Hauptkomponenten, einer Pumpeneinheit zum Pumpen eines Arbeitsfluids, einer Elektromotoreinheit zum Antreiben der Pumpe und einer zugehörigen elektronischen Steuereinheit zur Steuerung und/oder Regelung der Motoreinheit und/oder Pumpeneinheit. Eine MPE für Anwendungen im Fahrwerkbereich nimmt elektrische Leistungen von bis zu 5 kW auf. Selbst wenn die MPE in einem 48 V-Bordnetz betrieben wird, um die elektrischen Ströme zu begrenzen, treten immer noch hohe Ströme von 100 A und mehr auf. Aber auch bei Antriebsaggregaten im Elektrofahrzeugbereich, die beispielsweise für eine Versorgungsspannung von 400 V ausgelegt sind, treten sehr hohe Ströme auf.

DE 10 2014 103 959 A1 und DE 10 2014 103 958 A1 zeigen bekannte MPEs.

Stromführende Anschlussstromleitungen müssen immer abgesichert werden. Die Sicherung wird üblicherweise im Hinblick auf den zu erwartenden maximalen Betriebsstrom, z. B. 125 A, ausgelegt. Neben dem maximalen Betriebsstrom muss der gesamte den Anschlussstrom führende Bereich auch den maximalen Fehlerstrom bis zum Auslösen der Sicherung tragen können. Im Hinblick auf derartige hohe Strombelastungen muss die elektrische Anbindung solcher E-Vorrichtungen zuverlässig und sicher sein. Ein Aspekt ist es dabei, an Übergangsstellen im den Anschlussstrom führenden Bereich ausreichend niedrige Übergangswiderstände sicherzustellen. Dazu werden Anschlussstromleitungen meist direkt im Inneren der E-Vorrichtung angeschlagen und mittels einer bekannten Verbindungstechnik wie Verschrauben, Verschweißen, Kaltschweißen etc. mit der E-Vorrichtung verbunden. Die elektrischen Anschlussstromleitungen sind dann als "Kabelschwanz" fest mit der E-Vorrichtung verbunden. Eine derartige Anbindung ist im Servicefall grundsätzlich nicht oder aber nur mit hohem Aufwand lösbar, besonders da dies ein Öffnen der E-Vorrichtung erfordert.

Anschlussstromleitungen werden in der Regel bis zur zugehörigen Verteilung oder Sicherung oft in einen Kabelbaum mit anderen Leitungen integriert verlegt und dort befestigt. Daher müssen bei der Montage oder im Servicefall immer die Anschlussstromleitungen und die E-Vorrichtung zusammen montiert bzw. getauscht werden. D. h., bei einem Fehler in einer der Anschlussstromleitungen muss auch die an sich nicht ausgefallene E-Vorrichtung mit getauscht werden. Ebenso müssen bei einem Ausfall der E-Vorrichtung die unter Umständen komplex verlegten Anschlussstromleitungen mit getauscht werden. Daher besteht Bedarf an einer lösbaren Verbindung an der E-Vorrichtung.

Aus dem 12 V-Bereich ist bisher keine kompakte und leicht handhabbare lösbare Verbindung für die oben als Beispiel genannten hohen Ströme bekannt. Bekannte Steckverbindungen arbeiten typischerweise mit federnden Kontaktelementen.

DE 101 40 177 A1 zeigt eine bekannte Verbindung für hohe Ströme.

Eine kompakte Bauform bei ausreichend großer Kontaktfläche der Strom führenden Verbindungselemente mit ausreichend großen Kontaktflächen, die zuverlässig mit der notwendigen Kontaktkraft zusammengepresst werden, sowie gleichzeitig eine sichere Verbindung dazwischen sicherzustellen erscheint schwer umsetzbar.

US 2007/207652 A1 zeigt eine elektrische Verbindungskonstruktion zum Verbinden wenigstens eines Energie- bzw. Leistungszufuhranschlusses mit wenigstens einem motorseitigen Anschluss mit: einem bewegungsseitigen Verbindergehäuse, welches den Leistungszufuhranschluss enthält, ein Warteseiten-Verbindergehäuse, welches mit dem bewegungsseitigen Verbindergehäuse verbindbar ist, und wenigstens einen zwischenliegenden Anschluss, welcher wenigstens einen motorseitigen Kontaktabschnitt, welcher mit dem Motorseitenanschluss zu verbinden ist, und wenigstens einen leistungszufuhrseitigen Kontaktabschnitt enthält, welcher mit dem Leistungszufuhranschluss zu verbinden ist, wobei: eine Verbindungsoberfläche des warteseitigen Verbindergehäuses wenigstens teilweise freigelegt ist, der leistungszufuhrseitige Kontaktabschnitt wenigstens teilweise an der Verbindungsoberfläche des warteseitigen Verbindergehäuses freigelegt ist, ein Kontaktabschnitt des Leistungszufuhranschlusses an dem leistungszufuhrseitigen Kontaktabschnitt durch ein Verbinden des warteseitigen Verbindergehäuses und des bewegungsseitigen Verbindergehäuses angeordnet ist, und wenigstens ein Befestigungsglied wenigstens teilweise durch die Kontaktabschnitte eingesetzt ist, welche einer über dem anderen angeordnet sind, um den Leistungszufuhranschluss und den zwischenliegenden Anschluss miteinander zu verbinden. Die bekannte Verbindungskonstruktion benötigt jedoch eine relativ hohe motorseitige Einbauhöhe.

Es ist daher Aufgabe der vorliegenden Erfindung, eine möglichst kompakte, möglichst einfach aufgebaute, ohne Zerstörung lösbare Verbindungseinrichtung für hohe Ströme für eine E-Vorrichtung bereitzustellen.

Die Aufgabe wird mit den jeweiligen Merkmalen eines der unabhängigen Ansprüche gelöst. Weitere Ausführungsbeispiele und vorteilhafte Weiterbildungen sind in den sich jeweils anschließenden Unteransprüchen definiert. Dabei gelten Merkmale und Details, die im Zusammenhang mit der erfindungsgemäßen Anschlusseinrichtung beschrieben sind, selbstverständlich auch im Zusammenhang mit der erfindungsgemäßen Leitungsanschlusseinrichtung und jeweils umgekehrt sowie entsprechend für die Verbindungseinrichtung als auch für eine E-Vorrichtung mit einer Anschlusseinheit. Daher wird bezüglich der Offenbarung der einzelnen Aspekte wechselseitig Bezug genommen.

Der Kern der vorliegenden Erfindung liegt in der Gestaltung einer lösbaren, kompakt und damit platzsparend aufgebauten Verbindungseinrichtung für einen Leistungsanschluss für eine E-Vorrichtung, wie beispielsweise eine E-Maschine, insbesondere zur Versorgung der E-Vorrichtung mit Strom bei einer Spannung von 12 V bis 400 V, bevorzugt bei einer Spannung von 12 V, 24 V, 48 V oder 400 V. Dabei kann es sich beispielsweise um ein 12 V-, 24 V- oder 48 V-Bordnetz oder eine 400 V-Antriebsbatterie (Elektrofahrzeugbereich) handeln. Die Verbindungseinrichtung kann ohne Zerstörung gelöst und wieder verbunden werden. Zum anderen bietet die Verbindungseinrichtung eine sichere mechanische und elektrische Verbindung, die hohe Ströme, wie z. B. 80 A und mehr, bevorzugt bis zu 150 A, mindestens 125 A, übertragen kann. Selbstverständlich müssen diese Ströme nicht stationär sein, da eine aktuelle Stromaufnahme der E-Vorrichtung vom aktuellen Betriebspunkt abhängig ist. D. h., die hier vorgeschlagene Dimensionierung richtet sich nach dem zu erwartenden maximalen Strom. Die Verbindungseinrichtung ist so gestaltet, dass sie durch geeignete Abdichtungen für den Einsatz unter besonderen Umgebungsbedingungen, z. B. im Fahrzeugaußenbereich, insbesondere im Unterbodenbereich, geeignet ist. D. h., die Verbindungseinrichtung kann die Anforderungen der ISO 20653 gemäß IP6K9K erfüllen, d. h. kann ohne großen Zusatzaufwand staubdicht und spezifisch für Straßenfahrzeuge gegen Wasser bei Hochdruckreinigung und/oder Dampfstrahlreinigung geschützt ausgeführt werden. Die Verbindungseinrichtung ist außen liegend an der E-Vorrichtung angebracht und damit frei zugänglich und kann somit bei der Montage oder im Servicefall gelöst und wieder verbunden werden. Eine Öffnung des Gehäuses der E-Vorrichtung ist damit nicht notwendig. Die Verbindungseinrichtung ermöglicht damit die Montage des Kabelsatzes unabhängig von der Montage der E-Vorrichtung und umgekehrt. Im Servicefall kann die E-Vorrichtung getauscht werden, ohne zugehörigen Anschlussleitungen zwangsläufig mittauschen zu müssen. Ebenso kann ein Austausch der Anschlussleitungen, z. B. bei einem Marderschaden, ohne Tausch der E-Vorrichtung erfolgen. Der Aufwand bei der Montage oder der Demontage ist dadurch sowohl bei der Fertigung als auch im Servicefall deutlich geringer.

Es sei angemerkt, dass der Verbindungsstromleiter bevorzugt durch das Material des Anschlussteils elektrisch, besonders gegenüber dem Gehäuse der E-Vorrichtung, isoliert ist.

Das Gehäuse und entsprechend die Gehäuseteile können beispielsweise aus Aluminiumdruckguss hergestellt sein.

Die Leiter (Anschlussstromleiter, Verbindungsstromleiter, Stromanschluss) sind aus einem guten elektrischen Leiter, bevorzugt Kupfer hergestellt, die Elemente Verbindungsstromleiter und Stromanschluss können aus einem Blech als Ausgangsmaterial, bevorzugt einem Kupferblech, hergestellt sein.

Die Verbindungselemente können aus Kupfer oder Edelstahl hergestellt sein. Sind die Verbindungselemente aus Kupfer hergestellt, tragen sie vollständig zur Stromführung, besonders zum jeweiligen Leitungsquerschnitt bei. Verbindungselemente aus Edelstahl ermöglichen aufgrund der größeren Härte und geringeren Duktilität von Edelstahl an den Verbindungen der Kontaktfläche definierte Anpresskräfte einzustellen.

Anschlussteil und Leitungsanschlussteil sind bevorzugt als Kunststoffspritzgussteile hergestellt. Als Kunststoff wird bevorzugt ein thermoplastischer Kunststoff, beispielsweise Polyamid (PA) und/oder Polybutylenterephthalat (PBT) verwendet. Als Isolierung für den Anschlussstromleiter kann ein beliebiger geeigneter elektrischer Isolator, beispielsweise Polyolefin, verwendet werden.

Des Weiteren ist der Leitungsanschlussteil bevorzugt formschlüssig in die zugehörige Aufnahme des Anschlussteils eingefügt.

Der Leitungsanschlussteil kann vollständig, aber zumindest teilweise mit einem Einfügeabschnitt in die Aufnahme des Anschlussteils eingefügt sein.

Zur (bevorzugt senkrechten) Durchführung des lösbaren zweiten Verbindungselements kann die erste Kontaktfläche als auch die zweite Kontaktfläche entsprechende Durchgangslöcher aufweisen. Bei in den Anschlussteil eingefügtem Leitungsanschlussteil sind dementsprechend die Durchführung im Leitungsanschlussteil und die Durchgangslöcher in der ersten Kontaktfläche sowie in der zweiten Kontaktfläche zueinander deckungsgleich, um das Durchführen und/das Einfügen des zweiten Verbindungselements zu ermöglichen.

Bevorzugt ist an dem Leitungsanschlussteil eine außen liegende Öffnung der Durchführung für das zweite Verbindungselement mit einer lösbaren Kappe verschließbar. Die Kappe kann an dem Leitungsanschlussteil mit einem ebenfalls lösbaren Befestigungsmittel befestigt sein. Das lösbare Befestigungsmittel kann beispielsweise eine in ein am Leitungsanschlussteil ausgebildetes Gewinde eingreifende Schraube sein. Alternativ kann die Kappe ein Außengewinde aufweisen, das in ein entsprechend ausgebildetes Innengewinde an der Durchführung im Leitungsanschlussteil eingreifen und somit durch Einschrauben die Kappe an und in der Durchführung befestigen kann.

Das erste Verbindungselement kann direkt und fest am Verbindungsstromleiter im Bereich der ersten Kontaktfläche angeordnet sein. In einer bevorzugten Ausführung ist das zweite Verbindungselement eine Schraube. Das erste Verbindungselement ist dann eine an dem Verbindungsstromleiter im Bereich der ersten Kontaktfläche befestigte zugehörige Verbindungsmutter. Die Verbindungsmutter kann an dem Verbindungsstromleiter angeschweißt sein, beispielsweise durch Reibschweißen oder Punktschweißen. Die Verbindungsmutter kann alternativ an den Verbindungsstromleiter kraftschlüssig und/oder formschlüssig und/oder materialschlüssig an- oder eingepresst sein.

Die Aufnahme im Anschlussteil ist bevorzugt komplementär zu dem Einfügeabschnitt des Leitungsanschlussteils geformt. Bevorzugt sind die Aufnahme und der Einfügeabschnitt aufeinander abgestimmt zylinderförmig geformt. Damit kann der Leitungsanschlussteil beim Einfügen in die Aufnahme oder beim Lösen aus der Aufnahme durch axiales Drehen und die Zylinderachse leichter eingefügt oder leichter entfernt werden. Darüber hinaus ist es möglich, bei geeigneter Dimensionierung der ersten und der zweiten Kontaktfläche, dass der Leitungsanschlussteil in einer beliebigen Winkelstellung an dem Anschlussteil befestigt werden kann. Damit kann die Anschlussleitung am Einbauort der E-Vorrichtung in die dort am besten geeignete Richtung von der E-Vorrichtung wegführt werden.

Alternativ kann es gewünscht sein, dass sich der Einfügeabschnitt nur in einer einzigen oder mehreren vorbestimmten Winkelstellung(en) in die Aufnahme einfügen lässt. Dazu kann der Einfügeabschnitt ein entsprechend kodiertes, eine axiale Drehung verhinderndes Außenprofil aufweisen, das derart gestaltet ist, dass der Einfügeabschnitt nur in der vorbestimmten Stellung oder den vorbestimmten Stellungen in die Aufnahme, entsprechend gestaltet ist, eingefügt werden kann.

In einer weiteren Alternative kann der Leitungsanschlussteil ein eine axiale Drehung verhinderndes erstes Profilelement aufweisen, das derart gestaltet ist, dass es nur in der vorbestimmten Drehstellung oder den vorbestimmten Drehstellungen des Leitungsanschlussteils mit einem entsprechend komplementär geformten zweiten Profilelement am Anschlussteil zusammengefügt werden kann. D. h., hier können wieder die Aufnahme und der Einfügeabschnitt aufeinander abgestimmt zylinderförmig geformt sein, sodass der Einfügeabschnitt leicht in die Aufnahme eingefügt werden kann, jedoch kann der Einfügeabschnitt nur in der vorbestimmten Stellung oder den vorbestimmten Drehstellungen vollständig in die Aufnahme eingefügt werden.

Ein Abschnitt des Verbindungsstromleiters, an dem sich die erste Kontaktfläche befindet, kragt bevorzugt beabstandet zu einer Bodenfläche der Aufnahme des Anschlussteils in die Aufnahme hinein. Dadurch ist der Abschnitt des Verbindungsstromleiters, der die erste Kontaktfläche aufweist, gegenüber der Bodenfläche der Aufnahme in einem gewissen Umfang (in der Richtung senkrecht zur ersten Kontaktfläche) beweglich. Dies unterstützt das Aufeinanderpressen der ersten Kontaktfläche und der zweiten Kontaktfläche mittels des lösbaren zweiten Verbindungselements.

Ein weiterer Aspekt der vorliegenden Erfindung betrifft eine E-Vorrichtung mit einer Anschlusseinrichtung zum Verbinden mit einer erfindungsgemäßen Leitungsanschlusseinrichtung. Dabei ist die Anschlusseinrichtung der Verbindungseinrichtung an einem Gehäuseteil der E-Vorrichtung befestigt.

Der Gehäuseteil der E-Vorrichtung kann eine Gehäusedurchführung aufweisen und der Anschlussteil einen Durchführungsabschnitt passend zu der komplementär geformten Gehäusedurchführung aufweisen.

In einer bevorzugten Ausführung weist der Gehäuseteil einen Gehäuseflansch auf, der zur Verbindung mit einem weiteren Gehäuseteil vorbereitet ist. Bevorzugt befindet sich die komplementär geformte Gehäusedurchführung im Gehäuseflansch. Der Anschlussteil kann dann zunächst mit einer Rückseite an dem Gehäuseteil befestigt sein und mit dem seitlich abzweigenden Durchführungsabschnitt durch die dazu komplementär geformte Gehäusedurchführung im Gehäuseflansch in das Innere des weiteren Gehäuseteils verlaufen. Damit liegt der Anschlussteil unter dem vom Gehäuseflansch definierten maximalen Umfang des Gehäuses. Wenn die Höhe des Leitungsanschlussteils im Wesentlichen von dem Einführungsabschnitt für die Aufnahme am Anschlussteil herrührt, führt die Verbindungsvorrichtung nicht zu einem größeren Platzbedarf der gesamten E-Vorrichtung.

Im Inneren des Gehäuses der E-Vorrichtung ist der Verbindungsleiter an seinem dortigen Ende mit dem Stromanschluss der E-Vorrichtung bevorzugt ebenfalls mit einer lösbaren Verbindung verbunden. Dies ist besonders bei der Ausführung mit der Gehäusedurchführung im Gehäuseflansch vorteilhaft, da die Elektronik oder Elektrik, die sich in dem an den Gehäuseflansch eingefügten weiteren Gehäuseteil befindet und an der sich der Stromanschluss befindet vom Anschlussteil bei Bedarf leicht gelöst werden kann. Jedenfalls erleichtert eine lösbare Verbindung am Stro manschluss die Erstmontage des Anschlussteils. Die lösbare Verbindung am Stromanschluss ist bevorzugt eine Schraubverbindung. Die lösbare Verbindung am Stromanschluss kann aber auch mit einem anderen grundsätzlich ohne Zerstörung der Verbindungspartner lösbarem Verbindungselement, beispielsweise einem Niet, hergestellt sein.

Der Anschlussteil kann an dem Gehäuse von außen und/oder von innen mit einem oder mehreren Verbindungselementen befestigt sein. Bei dem einen oder den mehreren Verbindungselementen kann es sich um eine Schraube oder ein Niet o. ä. handeln.

In einer besonders bevorzugten Ausführung ist die E-Vorrichtung eine elektrifizierte Maschine (E-Maschine). Die E-Maschine kann beispielsweise eine elektrohydraulische Motor-Pumpen-Einheit (MPE) sein, die aus einer Pumpeneinheit, einer Motoreinheit und einer Steuereinheit zusammengesetzt ist. Besonders bevorzugt ist der Anschlussteil in dem Bereich des Gehäuses der E-Maschine befestigt, der von einem Motorgehäuse als Gehäuseteil gebildet ist. Das Motorgehäuse kann den o.g. Gehäuseflansch aufweisen, an dem als weiterer Gehäuseteil ein Steuergehäuse be festigt ist, welches eine Steuereinheit der MPE einhaust.

Bevorzugt ist die Verbindungseinrichtung und damit entsprechend die Anschluss einrichtung und die Leitungsanschlusseinrichtung eine Verbindung für eine Spannung von 12 V bis 400 V, bevorzugt einer Spannung von 12V, 24V, 48V oder 400 V, für Ströme von 80 A und mehr, bevorzugt bis 150 A dimensioniert. Dabei kann es sich beispielsweise um eine Stromversorgung aus einem 12V-, 24V- oder 48 V-Bordnetz oder einer 400V-Antriebsbatterie handeln. Damit ist die Verbindungseinrichtung beispielsweise besonders für alle elektrifizierten Aggregateals E-Vorrichtung im Automotiv-Bereich geeignet.

Abschließend sei angemerkt, dass sich die Einrichtungen aller vorstehend diskutierten Aspekten der Erfindung für die Anforderungen für den Einsatz im Fahrzeugaußenbereich, beispielsweise im Bereich des Unterbodens, einrichten lassen. Zur Erfüllung der Anforderungen der ISO 20653 gemäß IP6K9K kann am Leitungsanschlussteil und/oder Anschlussteil eine erste Dichtung angeordnet sein, welche die Aufnahme des Anschlussteils bei eingefügtem Leitungsanschlussteil nach außen abdichtet. Des Weiteren kann am Leitungsanschlussteil und/oder der Kappe eine zweite Dichtung derart angeordnet sein, welche die Durchführung im Leitungsanschlussteil nach außen abgedichtet. Schließlich kann die Gehäusedurchführung und/oder der Durchführungsabschnitt des Anschlussteils mit einer dritten Dichtung versehen sein, die das Gehäuse bei montiertem Anschlussteil nach außen abdichtet.

Weitere Vorteile, Merkmale und Einzelheiten der Erfindung ergeben sich aus der nachfolgenden Beschreibung, in der unter Bezugnahme auf die Zeichnungen ein bevorzugtes Ausführungsbeispiel der Erfindung im Einzelnen beschrieben ist. Dabei können die in den Ansprüchen und in der Beschreibung erwähnten Merkmale je weils einzeln für sich oder in beliebiger Kombination erfindungswesentlich sein. Ebenso können die vorstehend genannten und die hier weiter ausgeführten Merk male jeweils für sich oder zu mehreren in beliebiger Kombination Verwenden finden. Funktionsähnliche oder identische Bauteile oder Komponenten sind, wo im mer möglich und sinnvoll mit gleichen Bezugszeichen versehen. Die in der Beschreibung der Ausführungsbeispiele verwendeten Begriffe "links", "rechts", "oben" und "unten" beziehen sich auf die Zeichnungen in einer Ausrichtung mit normal lesbarer Figurenbezeichnung bzw. normal lesbaren Bezugszeichen. Das gezeigte und beschriebene bevorzugte Ausführungsbeispiel ist nicht als abschließend zu verstehen, sondern hat beispielhaften Charakter zur Erläuterung der Erfindung. Die detaillierte Beschreibung dient der Information des Fachmanns, daher werden bei der Beschreibung bekannte Schaltungen, Strukturen und Verfahren nicht im Detail gezeigt oder erläutert, um das Verständnis der vorliegenden Beschreibung nicht zu erschweren. Nachfolgend wird die Erfindung beispielhaft anhand der begleitenden Zeichnungen beschrieben. Darin zeigen:
- Figur 1: eine perspektivische Ansicht einer Motor-Pumpen-Einheit (MPE) als E-Vorrichtung mit einer erfindungsgemäßen Verbindungseinrichtung zur Verbindung der MPE mit einer Anschlussleitung;
- Figur 2: eine perspektivische Ansicht der MPE der Figur 1 mit Blick von schräg oben auf die Anschlusseinrichtung, wobei die Leitungsanschlusseinrichtung von der Anschlusseinrichtung gelöst ist;
- Figur 3: die perspektivische Ansicht der MPE der Figur 2 mit Blick von schräg oben auf die Leitungsanschlusseinrichtung, wobei die Leitungsanschlusseinrichtung von der Anschlusseinrichtung gelöst ist;
- Figur 4: eine weitere perspektivische Ansicht der MPE der Figuren 1 bis 3 mit entferntem Steuergehäuseteil mit Blick von schräg oben auf die Anschlusseinrichtung und ohne Darstellung der Leitungsanschlusseinrichtung; und
- Figur 5: eine Querschnittansicht der MPE der Figur 1, wobei der Schnitt mittig durch einen Anschlussstromleiter und entsprechend durch die Leitungsanschlusseinrichtung als auch die Anschlusseinrichtung verläuft.

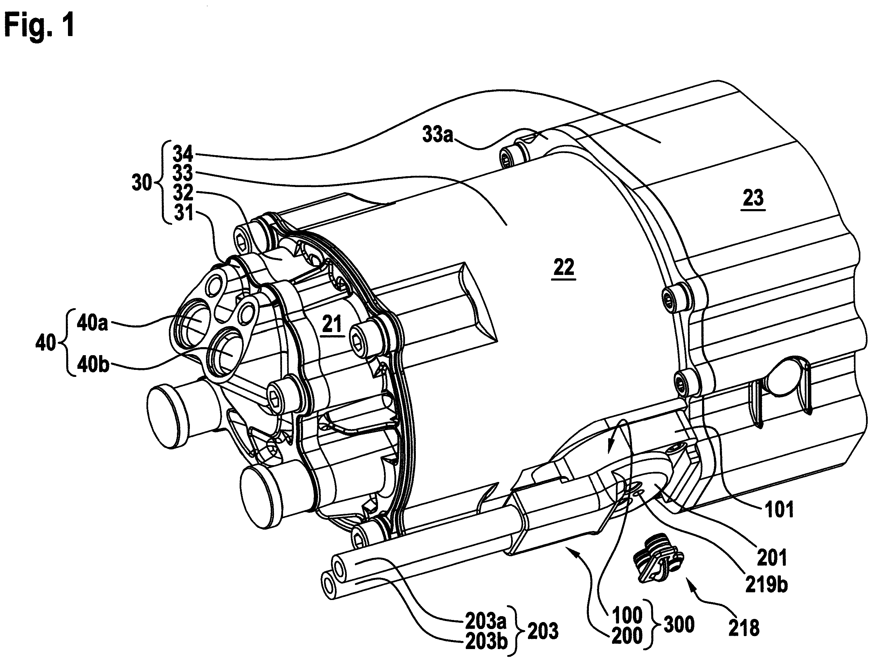

Figur 1 zeigt eine perspektivische Ansicht einer Motor-Pumpen-Einheit (MPE), die auch als Power-Pack bezeichnet wird, als ein mögliches Beispiel für eine elektrifizierte Vorrichtung (E-Vorrichtung). An der MPE 20 ist ein bevorzugtes Ausführungsbeispiel der erfindungsgemäßen Verbindungseinrichtung 300 angebracht. Die Verbindungseinrichtung 300 weist eine maschinenseitige Anschlusseinrichtung 100 auf, die mit einer Leitungsanschlusseinrichtung 200 aufseiten eines Anschlussstromleiters 203 verbunden ist. Der Anschlussstromleiter 203 weist hier einen ersten Anschlussstromleiter 203a und einen zweiten Anschlussstromleiter 203b als Hinleiter und Rückleiter auf.

Die MPE 20 besteht im Wesentlichen aus einer hydraulischen Verdrängungseinrichtung in Form einer Pumpeneinheit 21, die sich in einem Pumpengehäuse 32 befindet, das mit einem Pumpendeckel 31 verschlossen ist. Im Pumpendeckel befinden sich zwei hydraulische Anschlüsse 40a, 40b (40). An der dem Pumpendeckel 31 axial gegenüberliegenden Seite des Pumpengehäuses 32 schließt sich eine Motoreinheit 22 an, die einen Elektromotor zum Antrieb der Pumpeneinheit 21 beinhaltet, der von einem Motorgehäuse 33 eingehaust ist. Am Motorgehäuse 33 schließt sich auf einer der Pumpeneinheit 21 axial gegenüberliegenden Seite, an einem Ge häuseflansch 33a des Motorgehäuses 33, eine Steuereinheit 23 an, die von einem Steuergehäuse 34 eingehaust ist. Das Steuergehäuse 34 ist an dem Gehäuseflansch 33a mit dem Motorgehäuse 33 verbunden.

Bei der MPE 20 handelt es sich um ein Beispiel für eine E-Vorrichtung, für deren Anschluss an ein die Verbindungseinrichtung 300 ausgelegt ist. Die Verbindungs einrichtung 300 ist dabei besonders für die Übertragung von hohen Strömen von 80 A und mehr, bevorzugt für mindestens bis 125 A ausgelegt.

Die im Folgenden am Beispiel der MPE 20 näher beschriebene Verbindungseinrichtung 300 mit der Anschlusseinrichtung 100 und der Leitungsanschlusseinrichtung 200 eignet sich aufgrund ihrer kompakten und damit platzsparenden Bauweise be sonders für den Anschluss von E-Vorrichtungen, wie elektrischen Aggregaten oder elektrifizierten Maschinen im Automotiv-Bereich zur Anbindung an das Bordnetz zur Versorgung der E-Vorrichtung mit der für den Betrieb benötigten elektrischen Leistung.

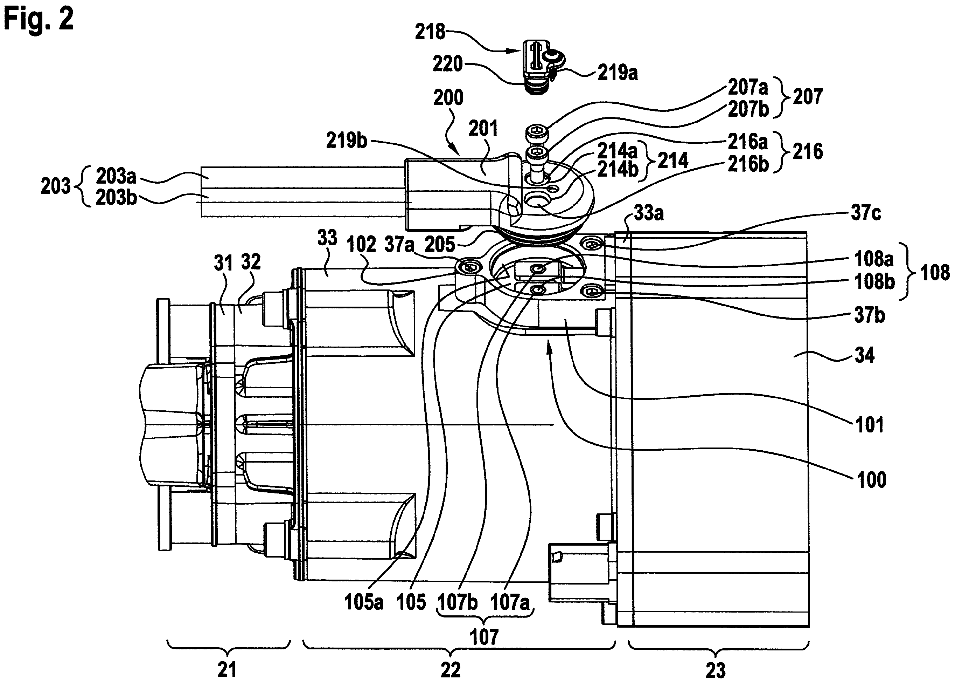

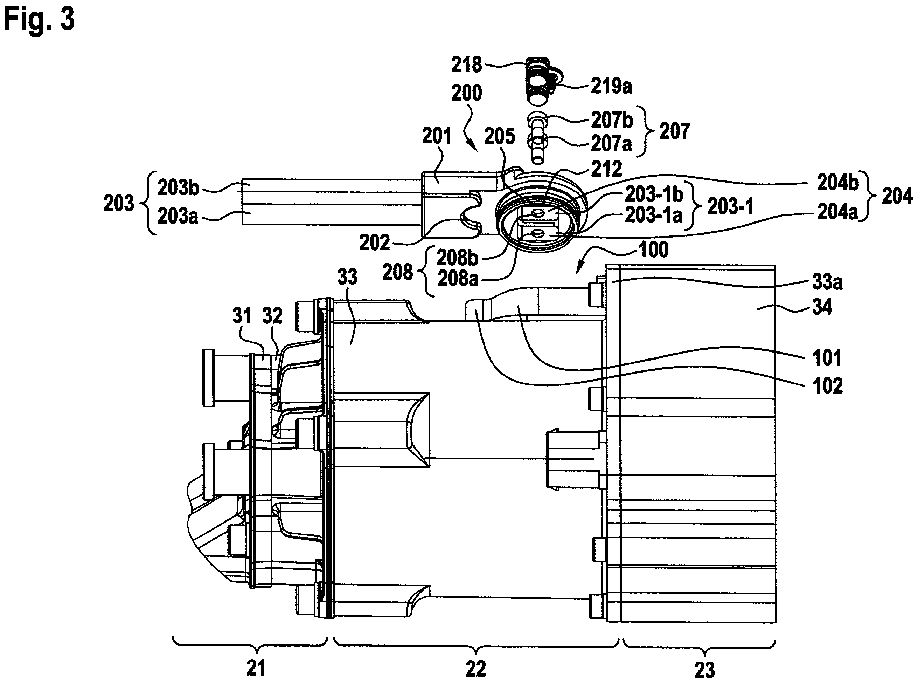

In der Figur 2 ist eine weitere perspektivische Ansicht der MPE 20 der Figur 1 mit Blick auf die Anschlusseinrichtung 100 von schräg oben gezeigt, wobei die Leitungsanschlusseinrichtung 200 von der Anschlusseinrichtung 100 gelöst ist. Die Anschlusseinrichtung 100 ist am Motorgehäuse 33 mit drei Schrauben 37a, 37b und 37c von außen befestigt. Ergänzend ist Figur 3 ist eine weitere perspektivische Ansicht der MPE 20 der Figuren 1 und 2, wobei die MPE 20 um etwa 120° um die Längsachse gedreht wurde, sodass Figur 3 einen Blick auf die Anschlusseinrichtung 100 von schräg oben zeigt.

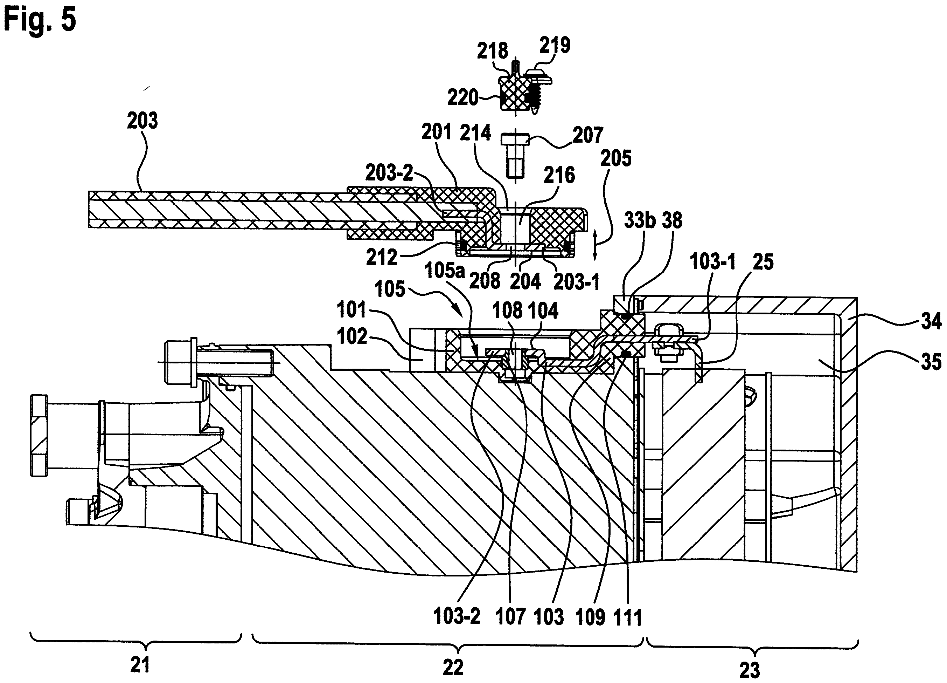

Im Anschlussteil 101 befindet sich eine Aufnahme 105, in die ein Einfügeabschnitt 205 (vgl. Figur 5) des Leitungsanschlussteils 201 zur Herstellung der Verbindungs einrichtung 300 eingefügt werden kann.

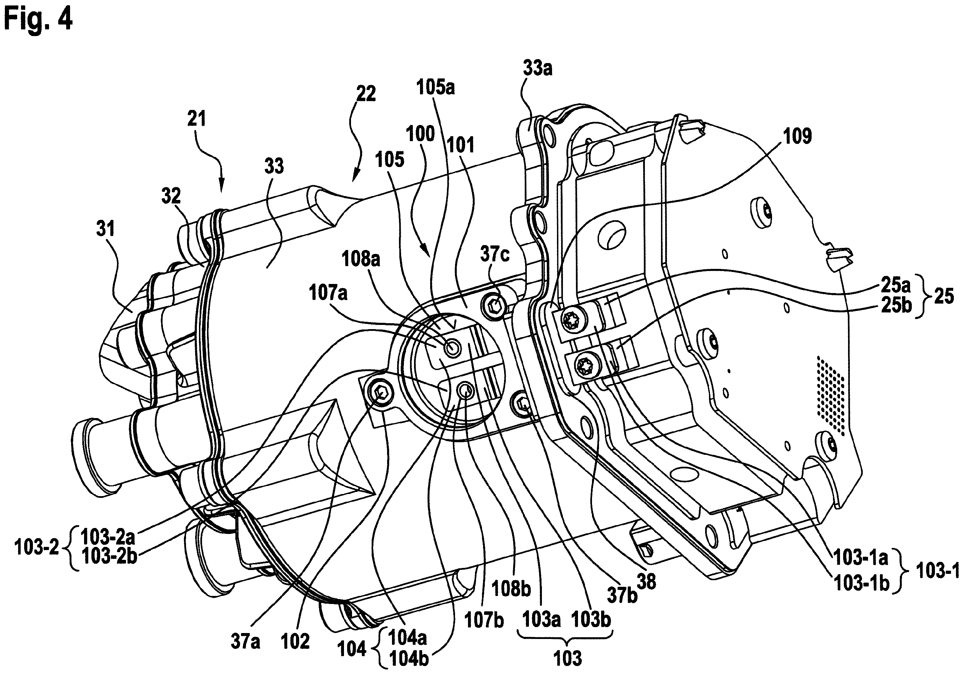

Zur besseren Beschreibung wird nun gleichzeitig Bezug auf Figur 4 genommen, in der eine weitere perspektivische Ansicht der in den Figuren 1 bis 3 gezeigten MPE 20 mit entferntem Steuergehäuseteil 34 und ohne Leitungsanschlusseinrichtung 200 dargestellt ist, um einen freien Blick auf die Anschlusseinrichtung 100 von schräg oben zu erhalten.

In Figur 4 ist zu erkennen, dass der Anschlussteil 101 des Ausführungsbeispiels zur Durchführung von zwei Verbindungsstromleitern 103a, 103b (103) gegeneinander und gegenüber dem Gehäuse 30 elektrisch isoliert durch den Anschlussteil 101 in das in Innere 35 (vgl. Figur 5) des Gehäuses 30 führt. jeweils an einem dortigen inneren Ende 103-1a, 103-1b (103-1) sind die Verbindungsstromleiter 103a, 103b (103) mit einem zugehörigen Stromanschluss 25a, 25b (25) der MPE 20 verbunden.

Im bevorzugten Ausführungsbeispiel sind die Verbindungsstromleiter 103 mit dem zugehörigen Stromanschluss 25 mit einer lösbaren Schraubverbindung befestigt, bei der eine Schraube durch eine Bohrung im jeweiligen inneren Ende 103-1 eines Verbindungsstromleiters 103 geführt ist und mit einer im gegenüberliegenden Stromanschluss 25 eingepressten Mutter verschraubt ist. Alternativ könnte anstelle der Verschraubung auch eine Verbindung mittels eines Niets erfolgen. Eine Nietverbindung wird hier als lösbare Verbindung verstanden, da die Verbindungspartner (hier Verbindungsstromleiters 103 und Stromanschluss 25) ohne Zerstörung voneinander gelöst werden können; es wird lediglich der Niet zerstört, dieser kann aber problemlos beim Wiederverbinden durch einen neuen Niet ersetzt werden.

An seinem äußeren (d. h., das in Bezug auf das Gehäuseinnere außen befindliche) Ende 103-2a, 103-2b (103-2) weist der jeweilige Verbindungsstromleiter 103a, 103b (103) jeweils eine erste Kontaktfläche 104a, 104b (104) auf, die beabstandet zu einer Bodenfläche 105a der Aufnahme 105 aus Richtung des Gehäuseflansches 33a in die Aufnahme 105 kragt.

Die Aufnahme 105 im Anschlussteil 101 ist im dargestellten Ausführungsbeispiel zylinderförmig und komplementär zum Einfügeabschnitt 205 des zylinderförmigen Leitungsanschlussteiles 201 geformt. Der Leitungsanschlussteil 201 weist ein erstes Profilelement 202 auf, das derart gestaltet ist, dass es nur in der in der Figur 1 ge zeigten und damit vorbestimmten Drehstellung des Leitungsanschlussteils 201 mit dem Anschlussteil 101 zusammengefügt werden kann. Dazu weist der Anschlussteil 101 ein zum ersten Profilelement 202 komplementär geformtes zweites Profilelement 102 auf. Im Ausführungsbeispiel passt das zweite Profilelement 102 form schlüssig in das erste Profilelement 202. D. h., die Aufnahme 105 und der Einfügeabschnitt 205 sind jeweils, aufeinander abgestimmt, zylinderförmig komplementär geformt. Der Einfügeabschnitt 205 kann damit zunächst leicht in die Aufnahme 105 eingefügt werden. Der Einfügeabschnitt 205 kann aber nur in der in Figur 1 gezeigten vorbestimmten Drehstellung/Ausrichtung vollständig in die Aufnahme 105 eingefügt werden. Damit ist die Verbindungseinrichtung 300 in verbundenem Zustand zusätzlich gegen ein Verdrehen des Leitungsanschlussteils 201 gegenüber dem Anschlussteil 101 gesichert und die noch näher zu beschreibenden Verbindungselemente 207a, 207b werden vor Scherkräften geschützt.

Der Anschlussteil 101 der Verbindungseinrichtung 300 ist, wie oben erläutert, am Motorgehäuse 33 der E-Maschine 20 befestigt, wobei ein auf die Seite des Gehäuseflanschs 33a ausgerichteter Durchführungsabschnitt 109 durch eine hierzu komplementär geformte Gehäusedurchführung 38 im Gehäuseflansch 33a gesteckt ist. Wie bereits oben beschrieben, verläuft der Verbindungsstromleiter 103 durch den Anschlussteil 101, nämlich durch den Durchführungsabschnitt 109 in das Innere 35 des Gehäuses 30, im bevorzugten Ausführungsbeispiel in das Innere 35 des Steuergehäuses 34.

Figur 5 zeigt einen Querschnitt der MPE 20 der Figuren 1 bis 4, wobei der Schnitt so geführt ist, dass er mittig durch einen Anschlussstromleiter 203 und entspre chend durch die Leitungsanschlusseinrichtung 200 als auch die Anschlusseinrichtung 100 verläuft. Zur besseren, besonders vergrößerten Darstellung, ist in der Figur 5 der untere Abschnitt der MPE 20 weggelassen worden. Außerdem ist das Innere der MPE 20, soweit hier nicht relevant, nicht im Detail, sondern nur als schraffierte Fläche dargestellt.

An der Figur 5 ist zu erkennen, dass der Leitungsanschlussteil 201 der Leitungsanschlusseinrichtung 200, durch den der Anschlussstromleiter 203 geführt ist, form schlüssig und zumindest teilweise derart in die Aufnahme 105 eingefügt werden kann, dass die erste Kontaktfläche 104 des Anschlussteiles 101 mit einer zweiten Kontaktfläche 204 des Anschlussstromleiters 203 in einen ebenflächigen elektrischen Kontakt mit einem ausreichend großen Querschnitt gebracht werden kann. Der Querschnitt entspricht im Wesentlichen der zur Deckung gebrachten ersten Kontaktfläche 104 und zweiten Kontaktfläche 204.

Ein in den Anschlussteil 101 integriertes erstes Verbindungselement 107 in Form einer Mutter, die an der Unterseite mit dem Verbindungsstromleiter 103 etwa mittig der ersten Kontaktfläche 104 durch Verpressen befestigt ist, kann mit einem zweiten Verbindungselement 207 (207a, 207b), in Form einer Schraube, die durch eine Durchführung 216 im Leitungsanschlussteil 201 nach Einfügen des Leitungsanschlussteils 201 in die Aufnahme 105, durch senkrecht die zweite Kontaktfläche 204 und senkrecht durch die erste Kontaktfläche 104 eingefügt werden und dann mit dem ersten Verbindungselement 107 verschraubt werden. Durch das Verschrauben wirkt das zweite Verbindungselement 217 mit dem ersten Verbindungs element 107 derart zusammen, dass die erste Kontaktfläche 104 und die zweite Kontaktfläche 204 entsprechend dem Anzugsmoment der Schraube aufeinandergepresst werden. Gleichzeitig wird dabei der Leitungsanschlussteil 201 am Anschlussteil 101 befestigt.

Zur Durchführung der lösbaren Schraube als zweites Verbindungselement 207 (207a, 207b) befinden sich jeweils in der ersten Kontaktfläche 104 und der zweiten Kontaktfläche 204 entsprechende Durchgangslöcher 108, 208, durch jeweils die Schraube geführt werden kann, um dann mit der in das Anschlussteil 101 integrierten Mutter als erstes Verbindungselement 107 (107a, 107b) durch Einschrauben zusammenzuwirken. Die lösbare Schraube wird in die Mutter eingeschraubt und dadurch der Leitungsanschlussteil 201 am Anschlussteil 101 entsprechend be festigt, während gleichzeitig die erste Kontaktfläche 104 im Anschlussteil 101 mit der zweiten Kontaktfläche 204 im Leitungsanschlussteil 201 entsprechend stark zusammengepresst werden.

Über die Dimensionierung des Querschnitts der aufeinander gepressten ersten und zweiten Kontaktfläche 104, 204 kann ein gewünschter, d. h. ausreichend geringer, Übergangswiderstand sichergestellt werden. Bevorzugt ist die Größe der Kontakt flächen so dimensioniert, dass sie ein Vielfaches der Leiterquerschnitte beträgt. Bei spielsweise beträgt in einer bestimmten Ausführung der Leiterquerschnitt 16mm² oder 25 mm² und die Kontaktflächen sind etwa mit 80 mm² dimensioniert, d. h., die Kontaktflächen sind mindestens dreimal, bevorzugt fünfmal größer als der Leiterquerschnitt dimensioniert. Damit ist die hergestellte Verbindungseinrichtung 300 geeignet, besonders hohe Ströme über den Anschlussstromleiter 203 an den Stromanschluss 25 zuzuführen.

Wie in den Figuren 1, 2 und 5 dargestellt, befindet sich im Leitungsanschlussteil 201 eine außen liegende Öffnung 214 der Durchführung 216 für die Schraube als zweites Verbindungselement 207 (207a, 207b) eine lösbare Kappe 218 zum Verschließen der Öffnung 214. Die Kappe 218 ist am Leitungsanschlussteil 201 mit einem lösbaren Befestigungsmittel 219a, ebenfalls im Ausführungsbeispiel eine Schraube, befestigt. Die Schraube als lösbares Befestigungsmittel 219a verläuft durch eine Bohrung in der Kappe 218 und greift in eine entsprechende Bohrung im Leitungsanschlussteil 201 ein, in dem je nach Material des Leitungsanschlussteils 201 ein entsprechendes Gewinde 219 vorgesehen sein kann.

In einer nicht dargestellten Alternative kann die Kappe jeweils eine für jede Durchführung 216a, 216b vorgesehene Einzelkappe sein. Die Einzelkappen können je weils ein Außengewinde aufweisen, welches in ein entsprechendes Innengewinde an der jeweiligen Durchführung 214a, 214b eingreifen kann.

Wie an den Figuren 2 und 5 erkennbar, läuft der Anschlussstromleiter 203 im We sentlichen als isoliertes Kabel in den Leitungsanschlussteil 201 und ist dort im Inne ren mit einem inneren Ende eines zweiten Verbindungsleiters verbunden, beispiels weise durch Verquetschen, Verschweißen o.ä. Der zweite Verbindungsleiter verläuft im Wesentlichen parallel zum Motorgehäuse 32 und dann im Leitungsanschlussteil 201 abgewinkelt auf das Motorgehäuse 30 der MPE 20 zu und endet schließlich mit der zweiten Kontaktfläche 204, die parallel zur ersten Kontaktfläche 104 ausgerichtet ist.

Die gesamte Verbindungseinrichtung 300 ist bevorzugt so gestaltet, dass sie für den Einsatz in Umgebungen mit besonderen Anforderungen, wie im Fahrzeugaußenbereich geeignet ist und zu diesem Zweck die Anforderungen gemäß IP6K9K der ISO 20653 erfüllt. Zu diesem Zweck ist am Leitungsanschlussteil 201 eine erste Dichtung 212 angeordnet, welche die Aufnahme 105 des Anschlussteils 101 bei eingefügtem Leitungsanschlussteil 201 nach außen abdichtet. An der Kappe 218 sind jeweilige zweite Dichtungen 220 derart angeordnet, welche jeweils die zuge hörige Durchführung 216a, 216b (216) in dem Leitungsanschlussteil 201 bei eingesetzter Kappe 218 nach außen abgedichtet. Schließlich ist am Durchführungsabschnitt 109 des Anschlussteils 101 eine dritte Dichtung 111 vorgesehen, die bei an der MPE 20 angeschlagenem Anschlussteil 101 die Gehäusedurchführung 38 nach außen abdichtet.

Mit der vorliegenden Erfindung wurde eine Verbindungseinrichtung 300 für hohe Ströme zur lösbaren Verbindung einer E-Vorrichtung (z.B. der MPE 20) mit einem Anschlussstromleiter 203 vorgeschlagen. Die Verbindungseinrichtung 300 besteht aus einer entsprechenden Anschlusseinrichtung 100 mit einem Anschlussteil 101 und einer entsprechenden Leitungsanschlusseinrichtung 200 mit einem Leitungsanschlussteil 201. Der Anschlussteil 101 ist zur Befestigung an einem Gehäuseteil 33 der E-Vorrichtung eingerichtet, d.h. dort befestigbar. Ein Verbindungsstromleiter 103 ist durch den Anschlussteil 101 in das Gehäuseinnere 35 des Gehäuses 30 geführt und an einem dortigen Ende 103-1 mit dem Stromanschluss 25 verbunden. An dem anderen, dem äußeren, Ende 103-2 weist der Verbindungsstromleiter 103 eine erste Kontaktfläche 104 auf. Der Leitungsanschlussteil 201, durch den der Anschlussstromleiter 200 geführt ist, kann formschlüssig zumindest teilweise derart in die Aufnahme 105 an den Anschlussteil 101 eingefügt werden, dass die erste Kontaktfläche 104 und die zweite Kontaktfläche 204 des Anschlussstromleiters 203 sich berühren. Zur Herstellung einer besonders guten Verbindung zur Durchleitung hoher Ströme werden die erste Kontaktfläche 104 und die zweite Kontaktfläche 204 über ein Schraube als lösbares erstes Verbindungselement 207, die durch eine Durchführung 216 im Anschlussteil 201, durch die zweite Kontaktfläche 204 und durch die erste Kontaktfläche 104 geführt ist und dort mit einer in den Anschluss teil 101 integrierten Mutter als erstes Verbindungselement 107 derart zusammen wirkt, dass die erste Kontaktfläche 104 und die zweite Kontaktfläche 204 durch das Verschrauben aufeinander gepresst werden. Dadurch lässt sich ein besonders geringer Übergangswiderstand sicherstellen. In besonders vorteilhafter Weise wird bei der Herstellung des guten elektrischen Kontakts zwischen der ersten Kontaktfläche 104 und der zweiten Kontaktfläche 204 gleichzeitig der Leitungsanschlussteil 201 an den Anschlussteil 101 lösbar befestigt.

## Patentansprüche

1. Verbindungseinrichtung (300) für hohe Ströme zur lösbaren Verbindung einer E-Vorrichtung mit einem Anschlussstromleiter (203; 203a, 203b), wobei die Verbindungseinrichtung (300) eine Anschlusseinrichtung (100) an einem Gehäuse (30) der E-Vorrichtung, eine Leitungsanschlusseinrichtung (200) mit einem Anschlussstromleiter (203; 203a, 203b) und ein lösbares zweites Verbindungselement (207; 207a, 207b) aufweist,
wobei die Anschlusseinrichtung (100) aufweist:
- einen Verbindungsstromleiter (103; 103a, 103b) und einen Anschlussteil (101) zur Befestigung an einem Gehäuseteil (33) des Gehäuses (30) der E-Vorrichtung und zur Durchführung des Verbindungsstromleiters (103; 103a, 103b) durch den Anschlussteil (101) ins Innere (35) des Gehäuses (30), wobei der Verbindungsstromleiter (103; 103a, 103b) an einem inneren Ende (103-1) im Inneren (35) des Gehäuses (30) mit einem Stromanschluss (25; 25a, 25b) verbindbar ist und an einem äußeren Ende (103-2) eine erste Kontaktfläche (104; 104a, 104b) aufweist;
- eine Aufnahme (105), in die ein Leitungsanschlussteil (201) der Leitungsanschlusseinrichtung (200) eingefügt werden kann; und
- ein in den Anschlussteil (101) integriertes erstes Verbindungselement (107; 107a, 107b);
wobei die Leitungsanschlusseinrichtung (200) aufweist:
- den Leitungsanschlussteil (201) zum Einfügen in die Aufnahme (105) an dem Anschlussteil (101) der Anschlusseinrichtung (100); und
- den Anschlussstromleiter (203; 203a, 203b), der durch den Leitungsanschlussteil (201) geführt ist und der an einem Ende (203-1; 203-1a, 203-1b) im Anschlussteil (201) eine zweite Kontaktfläche (204; 204a, 204b) aufweist,
wobei der Leitungsanschlussteil (201) derart in den Anschlussteil (101) einfügbar ist, dass die zweite Kontaktfläche (204; 204a, 204b) die erste Kontaktfläche (104; 104a, 104b) des Verbindungsstromleiters (103, 103a, 103b) kontaktieren kann und das lösbare zweite Verbindungselement (207; 207a, 207b) durch eine Durchführung (216; 216a, 216b) im Anschlussteil (101) bei eingefügtem Leitungsanschlussteil (201), durch die zweite Kontaktfläche (204; 204a, 204b) und durch die erste Kontaktfläche (104; 104a, 104b) geführt wird und mit dem in den Anschlussteil (101) integrierten ersten Verbindungselement (107; 107a, 107b) derart zusammenwirken kann, dass die erste Kontaktfläche (104; 104a, 104b) und die zweite Kontaktfläche (204; 204a, 204b) aufeinander gepresst und gleichzeitig der Leitungsanschlussteil (201) an dem Anschlussteil (101) lösbar befestigt werden kann, und
wobei der Anschlussstromleiter (203; 203a, 203b), wenn der Leitungsanschlussteil (201) in den Anschlussteil (101) eingefügt ist, zumindest teilweise im Leitungsanschlussteil (201) parallel zum Gehäuse (30) verläuft, und dann im Leitungsanschlussteil (201) abgewinkelt auf das Gehäuse (30) zuläuft, und schließlich die zweite Kontaktfläche (204; 204a, 204b) parallel zu der ersten Kontaktfläche (104; 104a, 104b) verläuft.

2. Verbindungseinrichtung (300) nach Anspruch 1,
wobei an dem Leitungsanschlussteil (201) eine Öffnung (214; 214a; 214b) der Durchführung (216; 216a; 216b) für das zweite Verbindungselement (207; 207a, 207b) mit einer lösbaren Kappe (218) verschließbar ist.

3. Verbindungseinrichtung (300) nach Anspruch 2,
wobei die Kappe (218) an dem Leitungsanschlussteil (201) mit einem lösbaren Befestigungsmittel (219a) befestigt ist; oder
wobei die Kappe ein Außengewinde aufweist, das in ein Innengewinde an der Durchführung eingreift.

4. Verbindungseinrichtung (300) nach einem der Ansprüche 1 bis 3,
wobei das erste Verbindungselement (107; 107a, 107b) an dem Verbindungsstromleiter (103; 103a, 103b) im Bereich der ersten Kontaktfläche (104; 104a, 104b) angeordnet ist.

5. Verbindungseinrichtung (300) nach einem der Ansprüche 1 bis 4,
wobei das zweite Verbindungselement (207; 207a, 207b) eine Schraube ist und das erste Verbindungselement (107; 107a, 107b) eine neben dem Verbindungsstromleiter (103; 103a, 103b) lose angeordnete oder daran befestigte Verbindungsmutter ist.

6. Verbindungseinrichtung (300) nach einem der Ansprüche 1 bis 5,
wobei die Aufnahme (105) in dem Anschlussteil (101) komplementär zu einem Einfügeabschnitt (205) des Leitungsanschlussteils (201) geformt ist.

7. Verbindungseinrichtung (300) nach einem der Ansprüche 1 bis 6,
wobei ein Abschnitt des Verbindungsstromleiters (103; 103a, 103b) mit den ersten Kontaktflächen (104; 104a, 104b) beabstandet zu einer Bodenfläche (105a) der Aufnahme (105) in die Aufnahme (105) kragt.

8. E-Vorrichtung mit einer Verbindungseinrichtung (300) gemäß einem der Ansprüche 1 bis 7,
wobei der Anschlussteil (101) der Verbindungseinrichtung (300) an einem Gehäuseteil (33) der E-Vorrichtung befestigt ist, und
wobei der Anschlussteil (101) mit einem Durchführungsanschnitt (109) durch eine komplementär geformte Gehäusedurchführung (38) verläuft.

9. E-Vorrichtung gemäß Anspruch 8,
wobei der Gehäuseteil (33) einen Gehäuseflansch (33a) zur Verbindung mit einem weiteren Gehäuseteil (34) aufweist.

10. E-Vorrichtung gemäß Anspruch 9,
wobei sich die komplementär geformte Gehäusedurchführung (38) im Gehäuseflansch (33a) befindet.

11. E-Vorrichtung nach einem der Ansprüche 8 bis 10,
wobei der Verbindungsstromleiter (103; 103a, 103b) im Inneren (35) des Gehäuses (30) an dem dortigen Ende (103-1; 103-1a, 103-1b) mit dem Stromanschluss (25; 25a, 25b) der E-Vorrichtung mittels einer lösbaren Verbindung verbunden ist.

12. E-Vorrichtung nach einem der Ansprüche 8 bis 11,
wobei der Anschlussteil (101) an dem Gehäuse (30) von außen und/oder von innen mittels einem oder mehreren Verbindungselementen (37a, 37b, 37c) befestigt ist.

13. E-Vorrichtung nach einem der Ansprüche 8 bis 12,
wobei die E-Vorrichtung eine elektrohydraulische Motor-Pumpen-Einheit, MPE, bestehend aus einer Pumpeneinheit (21), einer Motoreinheit (22) und einer Steuereinheit (23) ist.

14. E-Vorrichtung nach einem der Ansprüche 8 bis 13,
wobei die Verbindungseinrichtung (300) zum Anschluss der E-Vorrichtung an eine Spannung von 12 V bis 400 V zur Versorgung mit hohen elektrischen Strömen von mindestens 80 A bis 150 A bestimmt ist.

## Claims

1. A connection device (300) for high currents for a detachable connection of an e-apparatus with a terminal current conductor (203; 203a, 203b), wherein the connection device (300) has a terminal device (100) on a housing (30) of the e-apparatus, a line terminal device (200) with a terminal current conductor (203; 203a, 203b) and a detachable second connection element (207; 207a, 207b),
wherein the terminal device (100) has:
- a connection current conductor (103; 103a, 103b) and a terminal part (101) for fastening to a housing part (33) of the housing (30) of the e-apparatus and for leading the connection current conductor (103; 103a, 103b) through the terminal part (101) into the interior (35) of the housing (30), wherein the connection current conductor (103; 103a, 103b) at an internal end (103-1) in the interior (35) of the housing (30) is connectable with a current terminal (25; 25a, 25b) and at an external end (103-2) has a first contact area (104; 104a, 104b);
- a receiving means (105) into which a line terminal part (201) of the line terminal device (200) can be inserted; and
- a first connection element (107; 107a, 107b) integrated in the terminal part (101),
wherein line terminal device (200) has:
- the line terminal part (201) for insertion into the receiving means (105) at the terminal part (101) of the terminal device (100), and
- the terminal current conductor (203; 203a, 203b) which is led through the line terminal part (201) and which at one end (203-1; 203-1 a, 203-1 b) in the terminal part (201) has a second contact area (204; 204a, 204b),
wherein the line terminal part (201) is insertable into the terminal part (101) such that the second contact area (204; 204a, 204b) can contact the first contact area (104; 104a, 104b) of the connection current conductor (103, 103a, 103b), and the detachable second connection element (207; 207a, 207b), with the line terminal part (201) being inserted, can be led through a lead-through (216; 216a, 216b) in the terminal part (101), through the second contact area (204; 204a, 204b) and through the first contact area (104; 104a, 104b) and cooperate with a first connection element (107; 107a, 107b) integrated in the terminal part (101) such that the first contact area (104; 104a, 104b) and the second contact area (204; 204a. 204b) can be pressed onto each other and at the same time the line terminal part (201) can be detachably fastened to the terminal part (101),
wherein the terminal current conductor (203; 203a, 203b), when the line terminal part (201) is inserted in the terminal part (101), extends at least partly in the line terminal part (201) parallel to the housing (30), and then extends in the line terminal part (201) in angled fashion toward the housing (30), and, finally, the second contact area (204; 204a, 204b) extends parallel to the first contact area (104; 104a, 104b).

2. The connection device (300) according to any of claim 1,
wherein at the line terminal part (201) an opening (214; 214a; 214b) of the lead-through (216; 216a; 216b) for the second connection element (207; 207a, 207b) is closed with a detachable cap (218).

3. The connection device (300) according to claim 2,
wherein the cap (218) is fastened at the line terminal part (201) with a detachable fastening means (219a); or
wherein the cap has an external thread which engages in an internal thread at the lead-through.

4. The connection device (300) according to any of claims 1 to 3,
wherein the first connection element (107; 107a, 107b) is disposed at the connection current conductor (103; 103a, 103b) in the region of the first contact area (104; 104a, 104b).

5. The connection device (300) according to any of claims 1 to 4,
wherein the second connection element (207; 207a, 207b) is a screw and the first connection element (107; 107a, 107b) is a connection nut loosely disposed beside the connection current conductor (103; 103a, 103b) or fastened thereto.

6. The connection device (300) according to any of claims 1 to 5,
wherein the receiving means (105) in the terminal part (101) is formed complementary to an insertion portion (205) of the line terminal part (201).

7. The connection device (300) according to any of claims 1 to 6,
wherein a portion of the connection current conductor (103; 103a, 103b) with the first contact areas (104; 104a, 104b) protrudes in a fashion spaced apart from a bottom area (105a) of the receiving means (105) into the receiving means (105).

8. An e-apparatus with a connection device (300) according to any of claims 1 to 7,
wherein the terminal part (101) of the connection device (300) is fastened at a housing part (33) of the e-apparatus,
wherein the terminal part (101) with a lead-through portion (109) extends through a complementary formed housing lead-through (38).

9. An e-apparatus according to claim 8,
wherein the housing part (33) has a housing flange (33a) for connection with a further housing part (34).

10. An e-apparatus according to claim 9,
wherein the complementary formed housing lead-through (38) is located in the housing flange (33a).

11. The e-apparatus according to any of claims 8 or 10, wherein the connection current conductor (103; 103a, 103b) in the interior (35) of the housing (30) is connected at the end (103-1; 103-1 a, 103-1 b) there with the current terminal (25; 25a, 25b) of the e-apparatus by means of a detachable connection.

12. The e-apparatus according to any of claims 8 or 11, wherein the terminal part (101) is fastened at the housing (30) from outside and/or from inside by means of one or several connection elements (37a, 37b, 37c).

13. The e-apparatus according to any of claims 8 to 12,
wherein the e-apparatus is an electrohydraulic motor-pump unit, MPU, consisting of a pump unit (21), a motor unit (22) and a control unit (23).

14. The e-apparatus according to any of claims 8 to 13,
wherein the connection device (300) is intended for coupling the e-apparatus to a voltage of 12 V to 400 V for the supply with high electric currents of at least 80 A to 150 A.

## Revendications

1. Equipement de connexion (300) pour courants élevés destiné à la connexion amovible d'un dispositif électrique avec un conducteur de courant de raccordement (203; 203a, 203b), cependant que l'équipement de connexion (300) comporte un équipement de raccordement (100) à un boîtier (30) du dispositif électrique, un équipement de raccordement de conduit (200) ayant un conducteur de courant de raccordement (203; 203a, 203b), et un deuxième élément de connexion (207; 207a, 207b), amovible, cependant que l'équipement de raccordement (100) comporte :
- un conducteur de courant de connexion (103; 103a, 103b) et une partie de raccordement (101) pour la fixation à une partie de boîtier (33) du boîtier (30) du dispositif électrique et pour la réalisation du conducteur de courant de connexion (103; 103a, 103b) par la partie de raccordement (101) dans l'intérieur (35) du boîtier (30), cependant que le conducteur de courant de connexion (103; 103a, 103b) peut être, à une extrémité intérieure (103-1) dans l'intérieur (35) du boîtier (30), connecté avec un raccordement de courant (25; 25a, 25b), et comporte à une extrémité extérieure (103-2) une première surface de contact (104; 104a, 104b).
- un logement (105) dans lequel une partie de raccordement de conduit (201) de l'équipement de raccordement de conduit (200) peut être insérée ; et
- un premier élément de connexion (107; 107a, 107b) intégré dans la partie de raccordement (101) ;
cependant que l'équipement de raccordement de conduit (200) comporte :
- la partie de raccordement de conduit (201) pour l'insertion dans le logement (105) à la partie de raccordement (101) de l'équipement de raccordement (100) ; et
- le conducteur de courant de raccordement (203; 203a, 203b) qui est guidé à travers la partie de raccordement de conduit (201) et qui comporte à une extrémité intérieure (203-1; 203-1a, 203-1b) dans la partie de raccordement (201) une deuxième surface de contact (204; 204a, 204b) ;
cependant que la partie de raccordement de conduit (201) peut être insérée de telle façon dans la partie de raccordement (101) que la deuxième surface de contact (204; 204a, 204b) peut entrer en contact avec la première surface de contact (104; 104a, 104b) du conducteur de courant de connexion (103; 103a, 103b) et que le deuxième élément de connexion (207; 207a, 207b) amovible est, par un passage (216; 216a, 216b) dans la partie de raccordement (101), guidé, à l'état inséré de la partie de raccordement de conduit (201), à travers la deuxième surface de contact (204; 204a, 204b) et à travers la première surface de contact (104; 104a, 104b), et peut co-agir de telle façon avec le premier élément de connexion (107; 107a, 107b) intégré dans la partie de raccordement (101) que la première surface de contact (104; 104a, 104b) et la deuxième surface de contact (204; 204a, 204b) sont pressées l'une contre l'autre et que, en même temps, la partie de raccordement de conduit (201) peut être fixée de manière amovible à la partie de raccordement (101), et
cependant que le conducteur de courant de raccordement (203; 203a, 203b), quand la partie de raccordement de conduit (201) est insérée dans la partie de raccordement (101), s'étend au moins partiellement dans la partie de raccordement de conduit (201) parallèlement au boîtier (30), puis évolue dans la partie de raccordement de conduit (201) de manière coudée vers le boîtier (30), et enfin que la deuxième surface de contact (204; 204a, 204b) s'étend parallèlement à la première surface de contact (104; 104a, 104b).

2. Equipement de connexion (300) selon la revendication 1,
cependant que, à la partie de raccordement de conduit (201), une ouverture (214; 214a, 214b) du passage (216; 216a, 216b) pour le deuxième élément de connexion (207; 207a, 207b) peut être fermée par un capuchon (218) amovible.

3. Equipement de connexion (300) selon la revendication 2,
cependant que le capuchon (218) est fixé à la partie de raccordement de conduit (201) avec un moyen de fixation (219a) amovible ; ou
cependant que le capuchon comporte un filetage extérieur qui s'engage dans un filetage intérieur au passage.

4. Equipement de connexion (300) selon une des revendications de 1 à 3,
cependant que le premier élément de connexion (107; 107a, 107b) est agencé au conducteur de courant de connexion (103; 103a, 103b) dans la zone de la première surface de contact (104; 104a, 104b).

5. Equipement de connexion (300) selon une des revendications de 1 à 4,
cependant que le deuxième élément de connexion (207; 207a, 207b) est une vis et que le premier élément de connexion (107; 107a, 107b) est un écrou de connexion agencé lâchement à côté du conducteur de courant de connexion (103; 103a, 103b) ou y étant fixé.

6. Equipement de connexion (300) selon une des revendications de 1 à 5,
cependant que le logement (105) situé dans la partie de raccordement (101) est formé de manière complémentaire à une section d'insertion (205) de la partie de raccordement de conduit (201).

7. Equipement de connexion (300) selon une des revendications de 1 à 6,
cependant qu'une section du conducteur de courant de connexion (103; 103a, 103b) comportant les premières surfaces de contact (104; 104a, 104b) fait saillie dans le logement (105) de manière espacée par rapport à une surface de fond (105a) du logement (105).

8. Dispositif électrique ayant un équipement de connexion (300) selon une des revendications de 1 à 7,
cependant que la partie de raccordement (101) de l'équipement de connexion (300) est fixée à une partie de boîtier (33) du dispositif électrique, et
cependant que la partie de raccordement (101) s'étend, par une découpe de passage (109), à travers un passage de boîtier (38) formé complémentairement.

9. Dispositif électrique selon la revendication 8,
cependant que la partie de boîtier (33) comporte une bride de boîtier (33a) pour la connexion avec une autre partie de boîtier (34).

10. Dispositif électrique selon la revendication 9,
cependant que le passage de boîtier (38) formé complémentairement se trouve dans la bride de boîtier (33a).

11. Dispositif électrique selon une des revendications de 8 à 10,
cependant que le conducteur de courant de connexion (103; 103a, 103b) est, à l'intérieur (35) du boîtier (30), à l'extrémité intérieure (103-1; 103-1a, 103-1b) de ce dernier, connecté avec le raccordement de courant (25; 25a, 25b) du dispositif électrique au moyen d'une connexion amovible.

12. Dispositif électrique selon une des revendications de 8 à 11,
cependant que la partie de raccordement (101) est fixée au boîtier (30) depuis l'extérieur et/ou depuis l'intérieur au moyen d'un ou de plusieurs éléments de connexion (37a, 37b 37c).

13. Dispositif électrique selon une des revendications de 8 à 12,
cependant que le dispositif électrique est une unité moto-pompe électro-hydraulique, MPE, consistant en une unité de pompe (21), une unité de moteur (22) et une unité de commande (23).

14. Dispositif électrique selon une des revendications de 8 à 13,
cependant que l'équipement de connexion (300) est destiné au raccordement du dispositif électrique à une tension comprise entre 12 V et 400 V pour une alimentation en courants électriques élevés comprise entre au moins 80 A et 150 A.
